Europäisches Patentamt

European Patent Office

Office européen des brevets

(11) Publication number: **0 152 157**
**B1**

(12)

# EUROPEAN PATENT SPECIFICATION

(45) Date of publication of patent specification: **27.06.90**

(51) Int. Cl.⁵: **B 60 B 33/00**

(21) Application number: **85200190.8**

(22) Date of filing: **05.02.85**

(54) Swivel caster.

(30) Priority: **13.02.84 NL 8400460**

(43) Date of publication of application:
**21.08.85 Bulletin 85/34**

(45) Publication of the grant of the patent:
**27.06.90 Bulletin 90/26**

(84) Designated Contracting States:
**DE FR GB NL**

(56) References cited:
**EP-A-0 028 042**
**CH-A- 244 560**
**FR-A-2 097 852**
**FR-A-2 267 891**
**FR-A-2 325 523**
**US-A-2 963 732**
**US-A-4 084 288**

(73) Proprietor: **SKF TRANSPORTWIELEN B.V.**
**Wageningselaan 2**
**NL-3903 LA Veenendaal (NL)**

(72) Inventor: **Timmer, Hendrikus Jacobus Maria**
**Dr. Hoogenboomlaan 4**
**Tiel (NL)**

(74) Representative: **Merkelbach, B.**
**SKF Engineering & Research Centre B.V. P.O.**
**Box 2350**
**NL-3430 DT Nieuwegein (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention concerns a swivel caster of the type as mentioned in the preamble of claim 1.

In airfreight, extensive use is made of special, relatively large shipping pallets and shipping crates. In order to move these shipping pallets and crates easily in all horizontal directions when loading and unloading cargo planes, airport services use, amongst others, so-called roller platforms. These platforms consist mainly of a large number of swivel casters which are mounted casters upward, in a number of parallel rows on an essentially horizontal support structure, so that a shipping crate placed on the roller platform is supported by these swivel casters and can be easily moved in all directions over the platform, whereby the swivel casters rotate and adapt automatically to any given direction of displacement due to the swivelling of the swivel forks.

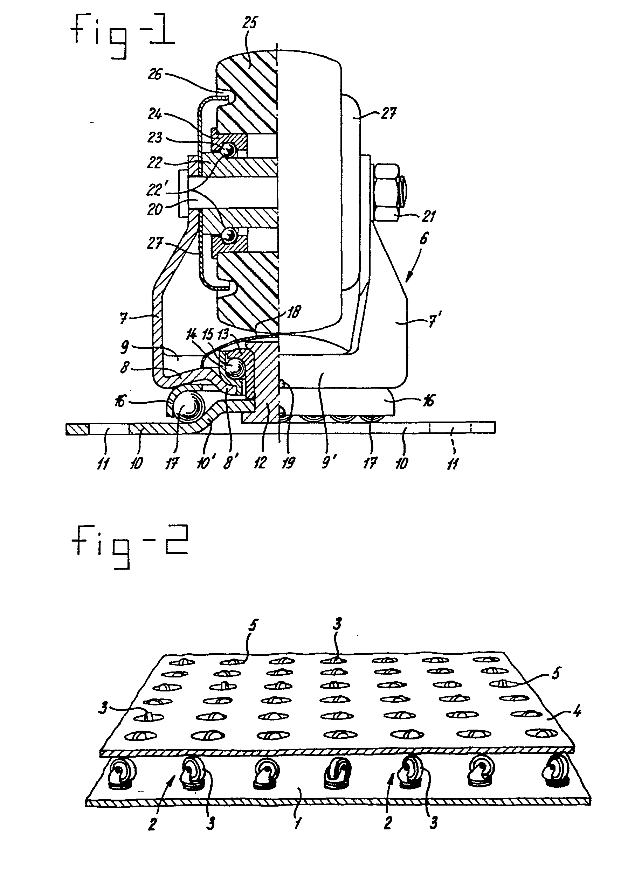

In the known swivel caster as used so far in roller platforms and available on the market, such as shown in figure 1, the truncated pin is attached with its bottom end to the base plate, and the outer race of the pivot bearing construction is attached to the body of the swivel fork because this outer race is contained in a downward bent rim of an opening cut into the body. Since, as a result, the top part of this pivot bearing construction is entirely unprotected so that water and dirt can freely enter the bearing construction, a sealing hood covering entirely the opening in the body is specially arranged on the top part of the body. As this bearing construction has a relatively limited stability, a second bearing construction is provided, the inner race of which is formed by an upward bent annular section of the base plate, and the outer race by the downward bent outer surface section of a special annular plate attached to the bottom of the body. This known swivel caster therefore comprises a rather complicated bearing construction and is relatively expensive to manufacture while it does not give full satisfaction in practical applications, mainly because water and dirt can penetrate into the bearing constructions from below. Moreover, it is necessary, in order to give sufficient stability to the fork, the body of which has an opening, that the legs of the swivel fork extend, on both sides, into the upward rim surrounding the body, so that an annular gutter is formed which is thus open at the top but wherein water and dirt can accumulate. Although a drain hole has been provided in said gutter, this, however, is easily clogged.

The purpose of the invention is to provide a swivel caster of the aforementioned type, which obviates the aforementioned disadvantages.

This purpose is reached due to the fact that the swivel caster according to the invention, comprises the characterizing features as defined in claim 1.

In this manner, a swivel caster is obtained which can easily discharge water, mud and dirt, which can be manufactured in a relatively simple and cheap way and whereby the application of a standard bearing, i.e., a sealed and long-life lubricated bearing, prevents the penetration of dirt and/or water in the bearing, which advantage is moreover enhanced by the specific arrangement of the dust hood over the top part of the bearing.

In the European patent application 0 028 042 a swivel caster is disclosed which is rather simple to manufacture and is provided with one bearing construction. However the legs and connection body are two separable parts, whereby the connection body is mainly hollow. Besides, the bearing construction is not double-sealed and long-life lubricated, and further comprises four raceways which are kept together by parts of said legs and support body. This swivel caster therefore is not suitable to be applied in the abovementioned platforms whereupon large and heavy pallets or crates are transported, often under severe circumstances.

The invention is described in detail with reference to the drawing in which:

Figure 1 shows, to the left, a cross-section and, to the right, an elevation of the known swivel caster,

Figure 2 is a schematic rendering of a roller platform,

Figure 3 shows, to the left, an elevation and, to the right, a cross-section of a swivel caster according to the invention, and

Figure 4 shows a side view of the swivel caster according to Figure 3.

As shown in Figure 2, a so-called roller platform includes a generally horizontal support 1 on which a number of swivel casters 2 are mounted in parallel rows, with the casters 3 pointing upward. At a distance above the support 1 a cover plate 4 is placed which has a number of openings 5 through which the casters 3 of the swivel casters 2 protrude slightly, so that a shipping crate placed on the cover plate is supported by a number of casters 3, which make it possible to move the crate easily in all directions over the cover plate 4.

Figure 1 shows the known swivel caster. This swivel caster includes a swivel fork 6 with the legs 7 and 7' and the body 8. The legs 7 and 7' extend on both sides into the upward rims 9 and 9' of the body 8.

The base plate 10 has openings 11 for attaching the swivel caster and, in its center, it has an opening for attaching a truncated pin 12 which runs through an opening formed in the center of the body 8. The inner race 13 of a first pivot bearing construction is attached around the truncated pin 12, and the outer race 14 is contained in the downward bent rim section 8' of an opening in the body 8. A number of ball bearings 15 are placed between the races 13 and 14. The second pivot bearing construction has an inner race which is formed by an upward bent section 10' of the base plate 10, whereas the outer race is formed by a downward bent outside section 16 of an annular plate attached to the bottom of the body 8. A number of ball bearings 17 are contained between the races 16 and 10'. Furthermore, a hood 18 is attached to the body 8, covering entirely the truncated pin 12 and the adjacent pivot bearing 13, 14, 15. The body has a weep hole 19 through which water, accumulated in the gutter formed by the body 8, the upward rim sections 9 and 9' and the connecting legs 7 and 7', can flow out.

An axle 20 runs between the legs 7 and 7' which is attached by means of the nut 21 and which is equipped with a bushing 22. The surface of the bushing 22 contains the inner races 22' of two pivot bearing constructions, whose outer races, for the ball bearings 23, are formed by the outer races 24. The caster 25, for example made of a synthetic material, is equipped with a bore which fits around the outer races 24. Furthermore, the caster 25 is equipped on both sides with a groove 26 in which the bent rim section of the sealing plate 27 fits; the sealing plate is placed over the axle 20. The sealing plates serve to prevent blockage of the wheel, for example, through pieces of rope or paper.

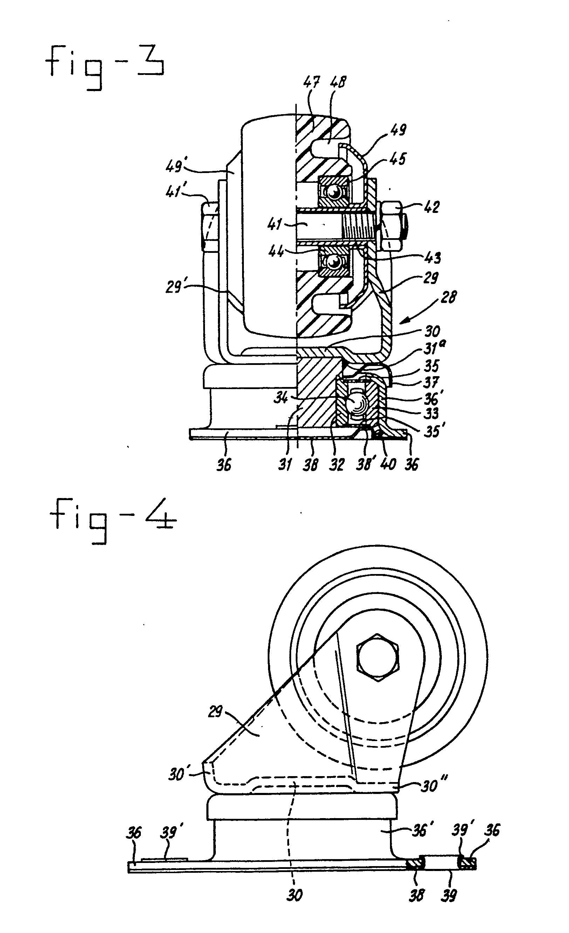

As shown in Figures 3 and 4, the swivel caster according to the invention includes a swivel fork 28 with the legs 29 and 29', and the fully sealed body 30. The legs 29 and 29' extend into the upward rim section 30' of the body 30 on one side only. The truncated pin 31 is attached to the bottom of the body 30 by means of a weld 31a. The inner race 32 of a standard ball bearing is attached around this truncated pin 31. A standard ball bearing includes always an outer race 33, a series of balls 34 in a cage, and the sealing rings 35 and 35'. In addition, this ball bearing is permanently lubricated, i.e., provided with a suitable lubricant. The outer race 33 is contained in an annular casing 36' which forms one unit with the base plate 36.

Over the top part of the ball bearing 32, 33, 34, a dust hood 37 is placed whose outer rim is bent downward toward the casing 36'.

Against the bottom of the base plate 36 a sealing plate 38 is placed, of the same size and outline as the base plate 36. The sealing plate 38 is equipped with openings 39 which are surrounded by upward collars 39' which fall within the openings in the base plate 36. Furthermore, the sealing plate 38 is provided with an annular protrusion 38' for the containment of a sealing ring 40 which, as a result, is squeezed between the protrusion 38' and the base plate 36. Between the legs 29 and 29', a bolt 41 is mounted with a bolt head 41' and a threaded end, on which thread a nut 42 is screwed. The bolt 41 is surrounded by a bushing 43 to which the inner races 44 of two standard ball bearings are attached. Around the outer races 45 of these ball bearings, the caster 47 is mounted which is equipped on both sides with a continuous groove 48 in which the rims of the sealing plates 49, 49' fit.

It appears clearly from the Figures 3 and 4 that, with the application of a sealed standard ball bearing 32, 33, 34, 35, 35', no dirt and/or moisture can penetrate the bearing while, in addition, the dust hood 37 and the sealing plate 38 give extra protection to the top and bottom of the bearing against penetrating dirt and/or moisture. Any water landing on the body 30 can immediately flow away over the flat edge 30'' of the body 30.

## Claims

1. Swivel caster, in particular for application in a so-called roller platform, including a swivel fork (28) with a body (30) and two legs (29, 29') extending from it and forming one unit with it, which legs extend into an upward rim around the body, with a caster-wheel (47) between said legs which rotates by means of pivot bearings (44, 45) mounted on an axle (41, 43) through the legs, and a base plate (36) with openings for attaching the swivel caster, which plate is connected to the body of the swivel fork by means of a solid truncated pin (31) mounted perpendicular to the body, which pin is attached to one of these components, and at least one bearing construction the inner race (32) of which is directly attached to the said pin and the outer race (33) of which is directly attached to the other component, in such manner that the swivel fork can swivel around the center-line of the said pin with regard to the base plate, and the caster-wheel can rotate around the center-line of the axle through the legs, whereby the latter centre-line crosses the extension of the centre-line of the truncated pin perpendicularly, characterized in that the body (30) of the swivel fork consists of a closed substantially flat section and the legs (29, 29') extend into the upward rim (30') on one side only, so that this rim (30') runs only along the surface section of the body (30) between the legs (29, 29') which, with regard to the axis of rotation of the caster-wheel (47), lies on the opposite side of the centre-line of the truncated pin (31), which pin (31) is welded to the bottom of the body (30) away from the legs (29, 29'), and that an annular dust hood (37) is mounted over the top part of the pivot bearing (32, 33, 34, 35, 35') directed toward the caster-wheel (47), and over the free upper rim of a casing (36'), whereby this hood has an outer rim bent downward, in the direction of the casing and which pivot bearing is a double-sealed standard bearing (32, 33, 34, 35, 35'), the outer race (33) of which is directly attached to said annular casing (36') which rises upward from the base plate (36) with which it forms one unit or to which it is connected.

2. Swivel caster according to claim 1, characterized in that a sealing plate (38) is mounted against the bottom of the base plate (36), whereby the entire bottom of the pivot bearing (32, 33, 34) is sealed against outside influences.

3. Swivel caster according to claim 2, characterized in that the sealing plate (38) has essentially the same size and outline as the base plate (36), having corresponding openings (39) surrounded by upward collars (39') which fall within the openings in said base plate (36).

4. Swivel caster according to claims 1—3, characterized in that said caster-wheel (47) rotates on two standard ball bearings (44, 45) which are mounted on said axle (41, 43) supported by the legs (29, 29') of said swivel fork (28).

**Patentansprüche**

1. Lenkrolle, insbesondere zur Verwendung bei einem sogenannten Rollpodest, bestehend aus einer Schwenkgabel (28) mit einem Grundkörper (30) und zwei sich von diesem weg erstreckenden und mit diesem eine Einheit bildenden Schenkeln (29, 29'), die sich in einem aufwärts gerichteten Rand rings um den Grundkörper erstrecken, aus einem Laufrad (47) zwischen den Schenkeln, das mit Hilfe von auf einer Achse (41, 43) durch die Schenkel angebrachten Drehlagern (44, 45) dreht, aus einer mit Löchern zum Befestigen der Lenkrolle versehenen Grundplatte (36), die mit dem Grundkörper der Schwenkgabel durch einen lotrecht zu diesem angebrachten massiven, abgeplatteten Bolzen (31) verbunden ist, welcher an einem dieser Teile befestigt ist, und aus wenigstens einem Lageraufbau, dessen innerer Laufring (32) unmittelbar mit dem Bolzen und dessen äußeren Laufring (33) unmittelbar an dem anderen Teil befestigt ist, dergestalt, daß die Schwenkgabel und die Mittellinie des Bolzens im Verhältnis zur Grundplatte und das Laufrad um die Mittellinie der Achse durch die Schenkel zu drehen vermögen, wodurch die letztere Mittellinie die Verlängerung der Mittellinie des abgeplatteten Bolzens senkrecht kreuzt, dadurch gekennzeichnet, daß der Grundkörper (30) der Schwenkgabel aus einem geschlossenen, im wesentlichen flachen Teil besteht und sich die Schenkel (29, 29') in den aufwärts gebogenen Rand (30') nur an einer Seite erstrecken, so daß dieser Rand (30') nur entlang demjenigen Oberflächenabschnitt des Grundkörpers (30) zwischen den Schenkeln (29, 29') verläuft, der mit Bezug auf die Drehachse des Laufrades (47) auf der entgegengesetzten Seite der Mittellinie des abgeplatteten Bolzens (31) liegt, welcher Bolzen (31) an dem Boden des Grundkörpers (30) von den Schenkeln (29, 29') entfernt verschweißt ist, und daß eine ringförmige Staubkappe (37) über den oberen Teil des Schwenklagers (32, 33, 34, 35, 35') in Richtung gegen das Laufrad (47) und über den freien oberen Rand eines Gehäuses (36') angebracht ist, wodurch diese Kappe einen nach unten in Richtung auf das Gehäuse gebogenen Rand aufweist, und welches Drehlager ein beiderseits abgedichtetes Standardlager (32, 33, 34, 35, 35') ist, dessen äußerer Laufring (33) unmittelbar an dem ringsförmigen Gehäuse (36') befestigt ist, welches von der Grundplatte (36), mit der es eine Einheit bildet oder verbunden ist, nach aufwärts ragt.

2. Lenkrolle nach Anspruch 1, dadurch gekennzeichnet, daß gegen den Boden der Grundplatte (36) eine Dichtplatte (38) angebracht ist, wodurch der gesamte Boden des Schwenklagers (32, 33, 34) gegen äußere Einflüsse abgedichtet ist.

3. Lenkrolle nach Anspruch 2, dadurch gekennzeichnet, daß die Dichtplatte (38) im wesentlichen die gleiche Größe und den gleichen Umriß wie die Grundplatte (36) besitzt und entsprechende Löcher (39), umgeben von aufwärts gerichteten Kragen (39'), die in die Löcher der Grundplatte (36) eingreifen, aufweist.

4. Lenkrolle nach einem der Ansprüche 1—3, dadurch gekennzeichnet, daß das Laufrad (47) auf zwei Standard-Kugellagern (44, 45) rotiert, die auf der von den Schenkeln (29, 29') der Schwenkgabel (28) getragenen Achse (41, 43) angebracht sind.

**Revendications**

1. Roulette pivotante, destinée à être utilisée en particulier dans une plate-forme dite à roulettes, comprenant une fourche pivotante (28) avec un corps (30) et deux jambes (29, 29') s'étendant depuis ce dernier et formant un seul bloc avec lui, ces jambes se prolongeant sous forme d'un rebord s'étendant vers le haut autour du corps, avec entre lesdites jambes, une roulette (47) qui tourne au moyen de roulements (44, 45) montés sur un axe de support (41, 43) à travers les jambes, et une plaque d'appui (36) avec des ouvertures pour fixer la roulette pivotante, cette plaque étant assemblée au corps de la fourche pivotante au moyen d'un axe d'assemblage tronqué plein (31) monté de façon perpendiculaire au corps, l'axe d'assemblage étant fixé à l'un de ces éléments, et au moins une structure de roulement, dont la bague intérieure (32) est directement fixée audit axe d'assemblage et dont la bague extérieure (33) est directement fixée à l'autre élément, de telle manière que la fourche pivotante peut pivoter autour de l'axe géométrique dudit axe d'assemblage par rapport à la plaque d'appui, et la roue porteuse peut tourner autour de l'axe géométrique de l'axe de support traversant les jambes de sorte que ce dernier axe géométrique croise le prolongement de l'axe géométrique de l'axe d'assemblage tronqué de façon perpendiculaire, caractérisée en ce que le corps (30) de la fourche pivotante se compose d'une section fermée sensiblement plate et en ce que les jambes (29, 29') se prolongent, sur un seul coté, sous la forme du rebord (30') orienté vers le haut de sorte que ce rebord (30') s'étend uniquement le long de la section de surface du corps (30) entre les jambes (29, 29') qui, par rapport à l'axe de rotation de la roue porteuse (47), se trouve sur le côté opposé de l'axe géométrique de l'axe d'assemblage tronqué (31), cet axe d'assemblage (31) étant soudé à la surface inférieure du corps (30) en direction opposée aux jambes (29, 29'), et en ce qu'un capot de protection antipoussière (37) est monté sur la partie supérieure du roulement de pivotement (32, 33, 34, 35, 35') située vers la roue porteuse (47), et par-dessus le bord supérieur libre d'une enveloppe (36'), de sorte que ce capot a un bord extérieur courbé vers le bas, en direction de l'enveloppe et le palier de pivotement est un roulement standard à double étanchéité (32, 33, 34, 35, 35'), dont la bague extérieure (33) est directement fixée à ladite enveloppe annulaire (36') qui s'élève depuis la plaque d'appui (36) avec laquelle elle fait corps ou à laquelle elle est reliée.

2. Roulette pivotante selon la revendication 1, caractérisée en ce qu'une plaque d'étanchéité (38) est montée contre le surface inférieure de la plaque d'appui (36), de sorte que toute la surface inférieure de roulement de pivotement (32, 33, 34) est rendue étanche vis-à-vis des influences extérieures.

3. Roulette pivotante selon la revendication 2, caractérisée en ce que la plaque d'étanchéité (38) a essentiellement les mêmes taille et contour que la plaque d'appui (38), en ayant des ouvertures correspondantes (39) entourées par des collets montants (39') qui rentrent dans les ouvertures dans ladite plaque d'appui (36).

4. Roulette pivotante selon la revendications 1 à 3, caractérisée en ce que ladite roue porteuse (47) tourne sur deux roulements à billes standard (44, 45) qui sont montés sur ledit axe de support (41, 43) supporté par les jambes (29, 29') de ladite fourche pivotante (28).

fig-1

25
26
24
23
22
22'
20
27
21
6
7
7'
18
9
14 15 13
8
16
16
11 10 17 10' 8' 12 19 9' 17 10 11

fig-2

5
3
3
5
4
2 3 1 2 3

fig-3

fig-4